# EUROPEAN PATENT APPLICATION

(11) **EP 2 555 390 A2**
(43) Date of publication of application: **06.02.2013**
(21) Application number: 12154392.0
(22) Date of filing: 08.02.2012
(51) Int. Cl.: H02K 3/52

(54) **Rotating electrical machine with wire connecting substrate**

(30) Priority: 05.08.2011 JP 2011172127; 05.08.2011 JP 2011172128; 05.08.2011 JP 2011172129
(71) Applicant: Kabushiki Kaisha Yaskawa Denki, Kitakyushu-shi, Fukuoka 806-0004 (JP)
(72) Inventor: Yamaguchi, Kanta, Kitakyushu-Shi, Fukuoka 806-0004 (JP)
(74) Representative: Gendron, Vincent Christian

(57) **Abstract**

The rotating electrical machine (1) comprises a rotor (3), a stator (2), and a wire connecting substrate (100) configured to connect end portions (7a) of windings (7) of the stator (2) using a predetermined connection pattern, **characterized in that** the wire connecting substrate (100) comprises a plurality of circular-shaped or circular-arc shaped conductive members (110) that are concentrically arranged and connected to the end portions (7a) of the windings (7) respectively, and a circular-shaped insulating member (120) configured to cover at least a portion of a surface of the conductive members (110), and wherein each of the conductive members (110) comprises a through portion (113) through which the end portion (7a) of the windings (7) is inserted along an axial direction of a rotating shaft (10).

## Description

### TECHNICAL FIELD

The disclosed embodiment relates to a rotating electrical machine, a wire connecting substrate thereof, and respective manufacturing methods of the same.

### BACKGROUND ART

JP, A, 2006-158199 describes a rotating electrical machine that connects an end portion of windings of a stator on a wire connecting substrate. This wire connecting substrate comprises an insulating member (wiring board) and a conductive member (conductive member for each phase). The insulating member is formed by insulating material in a discoid shape. A plurality of circular-arc shaped grooves is provided in a radial direction on one end surface of the insulating member. An insertion hole connected to the groove is provided to the other end surface of the insulating member. A strip-shaped conductor is inserted into the groove of the insulating member. A terminal strip having a U-shaped groove is provided on a side surface of the strip-shaped conductor. The terminal strip protrudes from the insertion hole.

### DISCLOSURE OF THE INVENTION

### Problem to be Solved by the Invention

According to the above wire connecting substrate, the terminal strip protrudes from the insulating member to the outer peripheral side in the radial direction. To ensure that the terminal strip of the conductive member on the inner peripheral side does not interfere with the conductive member on the outer peripheral side, the terminal strip needs to be routed around in the axial direction. Or, the conductive member needs to be disposed so that it shifts in the axial direction for each phase. As a result, this wire connecting substrate leaves room for further miniaturization in the diameter and axial directions.

It is therefore an object of the present invention to provide a rotating electrical machine capable of wire connecting substrate miniaturization, a wire connecting substrate thereof, and respective manufacturing methods of the same.

### Means for Solving the Problems

In order to achieve the above described object, according to one aspect of the disclosure, there is provided a rotating electrical machine comprising a rotor, a stator, and a wire connecting substrate configured to connect end portions of windings of the stator using a predetermined connection pattern, **characterized in that** the wire connecting substrate comprises a plurality of circular-shaped or circular-arc shaped conductive members that are concentrically arranged and connected to the end portions of the windings respectively, and a circular-shaped insulating member configured to cover at least a portion of a surface of the conductive members, and wherein each of the conductive members comprises a through portion through which the end portion of the windings is inserted along an axial direction of a rotating shaft.
In order to achieve the above described object, according to another aspect of the disclosure, there is provided a rotating electrical machine comprising a rotor, a stator, and a wire connecting substrate configured to connect end portions of windings of the stator using a predetermined connection pattern, **characterized in that** the wire connecting substrate comprises a plurality of conductive members that are configured by disposing conductive wire rods divided respectively by absent portions in layers in the radial direction, and are connected to the end portions of the windings respectively, and a circular-shaped insulating member configured to cover at least a portion of a surface of the conductive members, and wherein the plurality of conductive members are arranged to be positioned on a common plane which is substantially orthogonal to an axial direction of a rotating shaft.

Further, in order to achieve the above described object, according to the other aspect of the disclosure, there is provided a wire connecting substrate of a rotating electrical machine that is provided to the rotating electrical machine comprising a rotor and a stator, and is configured to connect end portions of windings of the stator using a predetermined connection pattern, comprising a plurality of circular-shaped or circular-arc shaped conductive members that are concentrically arranged and configured to connect the end portions of the windings respectively using a predetermined pattern, and a circular-shaped insulating member configured to cover at least a portion of a surface of the conductive members, and wherein each of the conductive members comprises a through portion through which the end portion of the windings is inserted along an axial direction of a rotating shaft.
In order to achieve the above described object, according to the other aspect of the disclosure, there is provided a wire connecting substrate of a rotating electrical machine that is provided to the rotating electrical machine comprising a rotor and a stator, and is configured to connect end portions of windings of the stator using a predetermined connection pattern, comprising a plurality of conductive members that are configured by disposing conductive wire rods divided respectively by absent portions in layers in the radial direction, and are connected to the end portions of the windings respectively, and a circular-shaped insulating member configured to cover at least a portion of a surface of the conductive members, and wherein the plurality of conductive members are arranged to be positioned on a common plane which is substantially orthogonal to an axial direction of a rotating shaft.
More further, in order to achieve the above described object, according to the other aspect of the disclosure, there is provided a manufacturing method of a rotating electrical machine comprising a rotor, a stator, and a wire connecting substrate configured to connect end portions of windings of the stator using a predetermined connection pattern, wherein the wire connecting substrate is manufactured by a manufacturing process comprising a forming that forms a conductive wire rod into a spiral shape, a covering that covers at least a portion of a surface of the wire rod formed into the spiral shape with insulating material, and a dividing that divides the wire rod covered by the insulating material at predetermined circumferential locations.
In order to achieve the above described object, according to the other aspect of the disclosure, there is provided a manufacturing method of a wire connecting substrate that is provided to a rotating electrical machine comprising a rotor and a stator, and is configured to connect end portions of windings of the stator using a predetermined connection pattern, comprising a forming that forms a conductive wire rod into a spiral shape, a covering that covers at least a portion of a surface of the wire rod formed into the spiral shape with insulating material, and a dividing that divides the wire rod covered by the insulating material at predetermined circumferential locations.

### Advantages of the Invention

According to the rotating electrical machine of the present disclosure, it is possible to miniaturize a wire connecting substrate.

### BRIEF DESCRIPTION OF THE DRAWINGS

FIG. 1 is a longitudinal sectional view showing the overall configuration of a rotating electrical machine of the embodiment.
FIG. 2 is a plan view showing the overall configuration of the wire connecting substrate as viewed from the side opposite to the load side in the axial direction.
FIG. 3 is a cross-sectional view of the wire connecting substrate taken along line III-III in FIG. 2.
FIG. 4 is a plan view showing the overall configuration of the wire connecting substrate as viewed from the load side in the axial direction.
FIG. 5 is an explanatory view for explaining the connection pattern of the wire connecting substrate.
FIG. 6 is a wiring diagram of the rotating electrical machine of the embodiment.
FIG. 7 is a diagram showing a rectangular wire to be covered that is formed into a spiral shape.
FIG. 8 is a diagram showing a spiral-shaped rectangular wire to be covered that is covered with an insulating material.
FIG. 9 is a diagram showing a rectangular wire to be covered that is divided at predetermined locations.
FIG. 10 is a diagram showing a divided rectangular wire to be covered that is provided with through-holes.
FIG. 11 is a diagram showing end portions of windings that are pulled out from a stator.
FIG. 12 is a diagram showing winding end portions of the stator inserted through through-holes of corresponding conductive members.
FIG. 13 is a diagram showing the wire connecting substrate fixed to the stator, with excess sections of the winding end portions cut off.
FIG. 14 is a diagram showing the winding end portions fixed to the conductive members by soldering.

### BEST MODE FOR CARRYING OUT THE INVENTION

An embodiment will now be described with reference to accompanying drawings.

### Overall configuration of rotating electrical machine

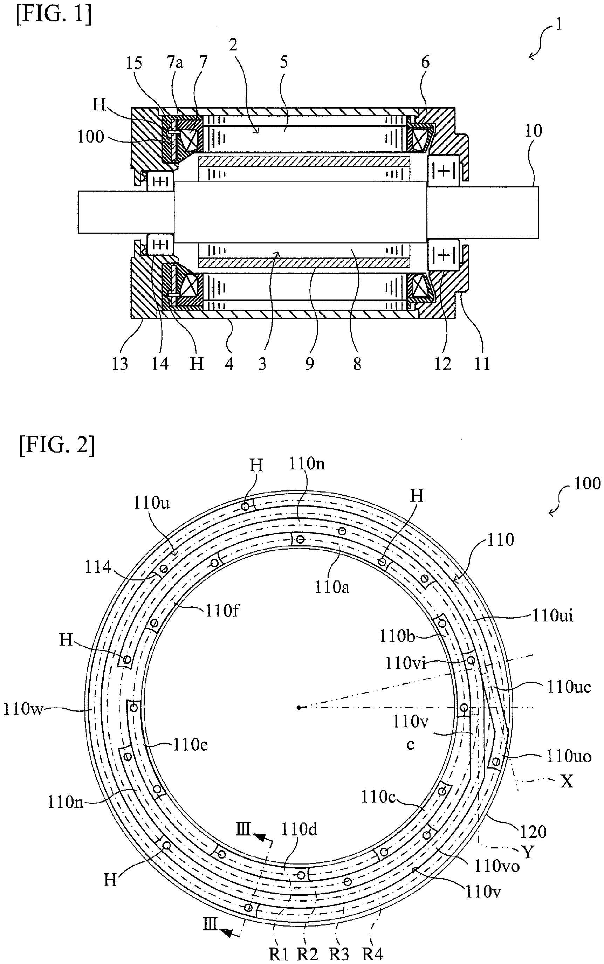

First, the overall configuration of a rotating electrical machine 1 of the embodiment will be described using FIG. 1. As shown in FIG. 1, the rotating electrical machine 1 comprises a stator 2 and a rotor 3. The stator 2 is provided to the inner peripheral surface of a frame 4 so that it is positioned opposite the rotor 3 in the diameter direction. The stator 2 comprises a laminated core body 5, a bobbin 6 through which the laminated core body 5 is inserted, and windings 7 that is wound around the bobbin 6. The bobbin 6 is made of an insulating material such as resin in order to electrically insulate the laminated core body 5 and the windings 7. A circular wire connecting substrate 100 that connects an end portion 7a of the windings 7 using a predetermined connection pattern is provided to a side opposite to a load side (left side in FIG 1) of the bobbin 6. The winding end portion 7a is fixed to the wire connecting substrate 100 by solder H. The wire connecting substrate 100 is covered by a resin 15.

The rotor 3 comprises a yoke 8 and a permanent magnet 9. The rotor 3 is provided on the outer peripheral surface of a rotating shaft 10. The rotating shaft 10 is rotatably supported by bearings 12 on the load side and bearings 14 on the side opposite to the load side. The outer ring of the bearings 12 on the load side is fit to a bracket 11 on the load side. The outer ring of the bearings 14 on the side opposite to the load side is fit to a bracket 13 on the side opposite to the load side.

The following describes an example of a case where the rotating electrical machine 1 is a three-phase AC electrical motor. The rotating electrical machine 1 comprises the stator 2 to which 12 of the windings 7 are assembled in a circular shape.

### Configuration of wire connecting substrate

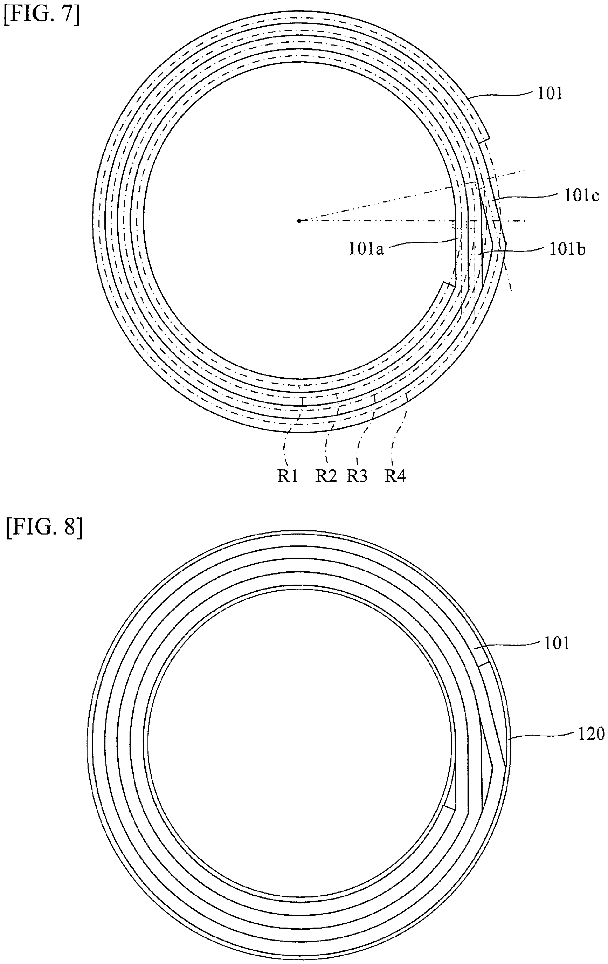

Next, the configuration of the wire connecting substrate 100 will be described using FIG. 2 to FIG. 4. As shown in FIG. 2, the wire connecting substrate 100 comprises a plurality of circular-arc shaped conductive members 110 and a circular-shaped insulating member 120, concentrically disposed. Each of the conductive members 110 is connected to the winding end portion 7a of the stator 2. The insulating member 120 covers the plurality of conductive members 110. While details will be described later, the plurality of conductive members 110 is formed by shaping into a spiral shape a rectangular wire 101 (a single wire rod; refer to FIG. 7) to be covered, and then dividing (creating absences within) this rectangular wire 101 to be covered at predetermined locations. That is, the conductive member 110 is configured so that the conductive wire rod divided by absent portions is disposed in layers in the radial direction. Note that the absent portions actually occur in the insulating member 120 as well when the rectangular wire 101 to be covered is divided, but these absent portions are not shown in FIG. 2 to prevent complexities in the illustration.

In the example shown in FIG. 2, each of the conductive members 110 is substantially concentrically disposed to form four layers in the radial direction. Six conductive members 110a to 110f disposed on the innermost peripheral side are conductive members for crossover. The conductive members 110a to 110f are disposed at substantially equal spacing along the circumferential direction of a concentric circle R1. Two conductive members 110n and 110n disposed on the outer peripheral side of the conductive members 110a to 110f are conductive members for neutral points. The conductive members 110n and 110n are disposed along the circumferential direction of a concentric circle R2. Conductive members 110u and 110v disposed further on the outer peripheral side of the conductive members 110n and 110n are conductive members for a U phase and a V phase, respectively. The conductive members 110u and 110v are disposed somewhat along the circumferential direction of a concentric circle R3. A conductive member 110w disposed on the outermost peripheral side is a conductive member for a W phase. The conductive member 110w is disposed along the circumferential direction of a concentric circle R4. Hereinafter, each of the conductive members is suitably referred to as crossover conductive members 110a to 110f, neutral point conductive members 110n, U-phase conductive member 110u, V-phase conductive member 110v, and W-phase conductive member 110w.

While the major portion of the U-phase conductive member 110u is disposed along the concentric circle R3, a portion of the U-phase conductive member 110u is disposed along the concentric circle R4. Within the U-phase conductive member 110u, the section along the concentric circle R3 will be referred to as an inner peripheral portion 110ui, and the section along the concentric circle R4 will be referred to as an outer peripheral portion 110uo. Note that the inner peripheral portion 110ui and the outer peripheral portion 110uo correspond to the circumferential portion in the claims. The U-phase conductive member 110u comprises a linear portion 110uc that linearly extends in the direction of a tangent line X of the inner peripheral portion 110ui. The linear portion 110uc is integrally provided between the two circular-arc shaped portions of the inner peripheral portion 110ui and the outer peripheral portion 110uo, which are concentrically disposed but differ in radius of curvature.

Similarly, while the major portion of the V-phase conductive member 110v is disposed along the concentric circle R3, a portion of the V-phase conductive member 110v is disposed along the concentric circle R2. Within the V-phase conductive member 110v, the section along the concentric circle R2 will be referred to as an inner peripheral portion 110vi, and the section along the concentric circle R3 will be referred to as an outer peripheral portion 110vo. Note that the inner peripheral portion 110vi and the outer peripheral portion 110vo correspond to the circumferential portion in the claims. The V-phase conductive member 110v comprises a linear portion 110vc that linearly extends in the direction of a tangent line Y of the inner peripheral portion 110vi. The linear portion 110vc is integrally provided between the two circular-arc shaped portions of the inner peripheral portion 110vi and the outer peripheral portion 110vo, which are concentrically disposed but differ in radius of curvature.

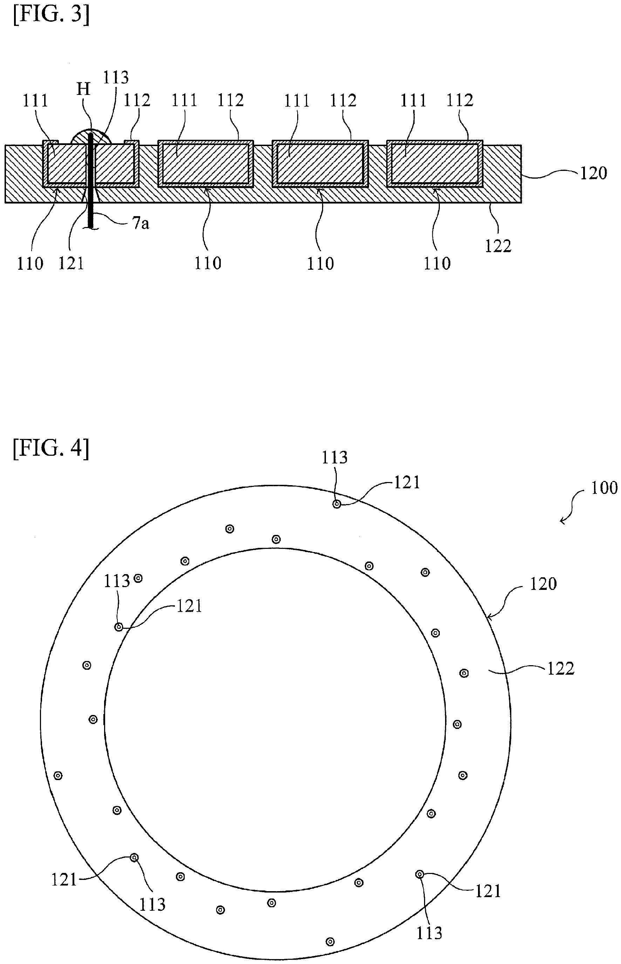

As shown in FIG. 3, the cross-sectional shape of the conductive member 110 (the rectangular wire 101 to be covered) is substantially square. The conductive member 110 comprises a conductive material 111 and a covering material 112 that covers the conductive material 111. As shown in FIG. 2 and FIG. 3, a through-hole 113 through which the winding end portion 7a is inserted in the axial direction of the rotating shaft 10 is provided as a through portion at the substantial center position in the width direction of both longitudinal end portions of each of the conductive members 110. The winding end portion 7a that is inserted through this through-hole 113 is fixed by the solder H to the surface of the connection side (the side opposite to the load side) of the conductive member 110. At this time, the covering material 112 is peeled away from the circumference of the through-hole 113 of the conductive member 110, and the solder H is provided to this peeled-away section. Note that the through portion used may be something other than a hole, such as a notch.

The insulating member 120 is a circular member formed by insert molding using a resin material, for example. The insulating member 120 fixes each of the conductive members 110 to a predetermined location on a common plane (not shown) that is substantially orthogonal to the axial direction of the rotating shaft 10. Further, the insulating member 120 maintains the insulation between each of the conductive members 110. As shown in FIG. 2 and FIG. 3, the insulating member 120 exposes at least the surface of the conductive member 110 that is on the connection side while covering all other surfaces. Note that, as shown in FIG. 3, each of the conductive members 110 is actually disposed so that a predetermined space is created in the radial direction by the insulating member 120. Nevertheless, this space is not shown in FIG. 2.

As shown in FIG. 3 and FIG. 4, a tapered hole 121 is provided to the location of the insulating member 120 corresponding to the through-hole 113 of the conductive member 110. This tapered hole 121 is provided to a surface 122 on the side opposite the connection side (the load side) of the insulating member 120. The diameter of the tapered hole 121 gradually decreases from the surface 122 toward the through-hole 113 of the conductive member 110. The winding end portion 7a of the stator 5 is inserted through the through-hole 113 of the conductive member 110 from the stator 5 side via this tapered hole 121.

### Connection pattern

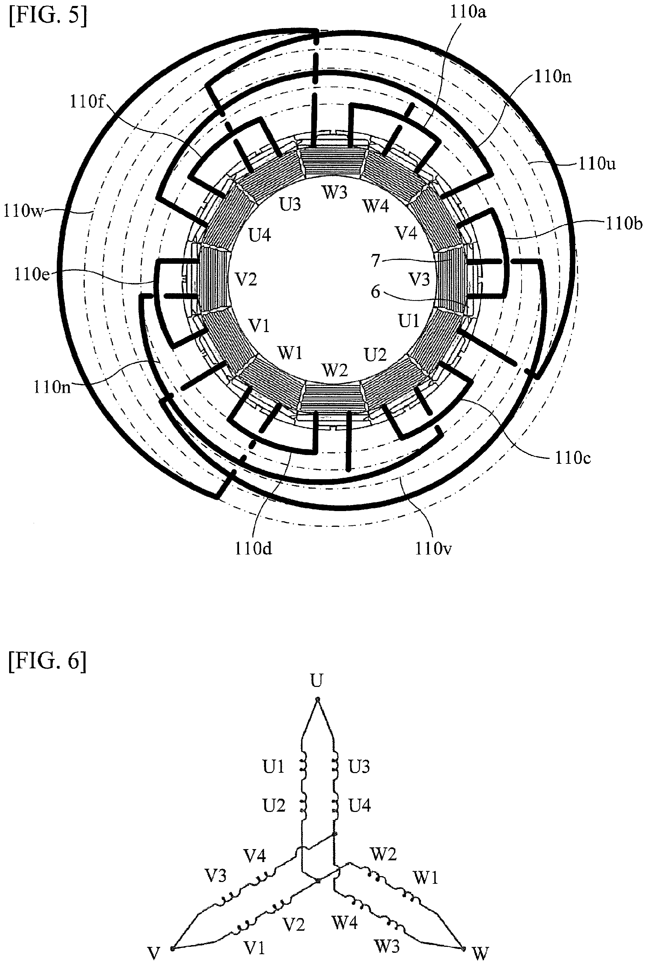

Next, the connection pattern of the wire connecting substrate 100 will be described using FIG. 5 and FIG. 6. Note that the reference numerals of each of the windings shown in FIG. 5 and FIG. 6 have a corresponding relationship. In this explanation, the windings 7 corresponding to U1 is called windings U1.

As shown in FIG. 5 and FIG. 6, the wire connecting substrate 100 connects the winding end portion 7a of the stator 2 using a connection pattern having two star connection systems. The star connection connects each of the three phases at a neutral point of one end. Specifically, the end portions 7a of one side of windings U1 and windings U2, which form a system on one side of the U-phase, are connected by the crossover conductive member 110c. The end portions 7a of one side of windings U3 and windings U4, which form a system of the other side of the U-phase, are connected by the crossover conductive member 110f. Similarly, the end portions 7a of one side of windings V1 and windings V2, which form a system of one side of the V-phase, are connected by the crossover conductive member 110e. The end portions 7a of one side of windings V3 and windings V4, which form a system of the other side of the V-phase, are connected by the crossover conductive member 110b. Further, similarly, the end portions 7a of one side of windings W1 and windings W2, which form a system of one side of the W-phase, are connected by the crossover conductive member 110d. The end portions 7a of one side of windings W3 and windings W4, which form a system of the other side of the W-phase, are connected by the crossover conductive member 110a.

Further, the end portions 7a of the other side of the windings U2, V2, and W2 are connected by the neutral point conductive member 110n. Similarly, the end portions 7a of the other side of the windings U4, V4, and W4 are connected by the neutral point conductive member 110n. Further, the end portion 7a of the other side of the windings U1 and the end portion 7a of the other side of the windings U3 are connected to the U-phase via the U-phase conductive member 110u. The end portion 7a of the other side of the windings V 1 and the end portion 7a of the other side of the windings V3 are connected to the V-phase via the V-phase conductive member 110v. The end portion 7a of the other side of the windings W1 and the end portion 7a of the other side of the windings W3 are connected to the W-phase via the W-phase conductive member 110w.

Manufacturing methods of wire connecting substrate and rotating electrical machine
Next, the manufacturing methods of the wire connecting substrate 100 and the rotating electrical machine 1 will be described using FIG. 7 to FIG. 14. First, as shown in FIG. 7, the single rectangular wire 101 to be covered is formed into a spiral shape. At this time, the spiral shape may be a simple spiral shape wherein the radius of curvature continually changes. Nevertheless, a spiral shape having the linear portions 101a to 101c is preferred. The linear portions 101a to 101c are sections that linearly extend in a tangent line direction of the circular-arc shaped sections, along the concentric circle R on the inner peripheral side. With the spiral shape having the linear portions 101a to 101c, it is possible to dispose the sections of the rectangular wire 101 to be covered other than the linear portions 101a to 101c on the concentric circles R1 to R4. As a result, the subsequent hole punching work for the through-hole 113 and the connection work with the winding end portion 7a can be easily performed. Note that, as previously described, the rectangular wire 101 to be covered comprises the conductive material 111 and the covering material 112, forming a substantially square cross-sectional shape. Further, the linear portions 101b and 101c shown in FIG. 7 respectively correspond to the linear portions 110vc and 110uc shown in FIG. 2. Note that this step corresponds to the first step described in the claims.

While, in the example shown in FIG. 7, the rectangular wire 101 to be covered is wound to form four layers in the radial direction, the number of windings is not limited thereto. That is, a suitable number of windings is set in accordance with the connection pattern, etc., of the wire connecting substrate 100.

Next, for example, the rectangular wire 101 to be covered that was thus formed into a spiral shape is fixed to metal die, and resin material is insert-molded. With this arrangement, the rectangular wire 101 to be covered is covered with insulating material. At this time, the rectangular wire 101 to be covered is covered so that at least the surface on the connection side of the rectangular wire 101 to be covered is exposed. With this arrangement, the insulating member 120 is formed, as shown in FIG. 8. Note that this step corresponds to the second step described in the claims.

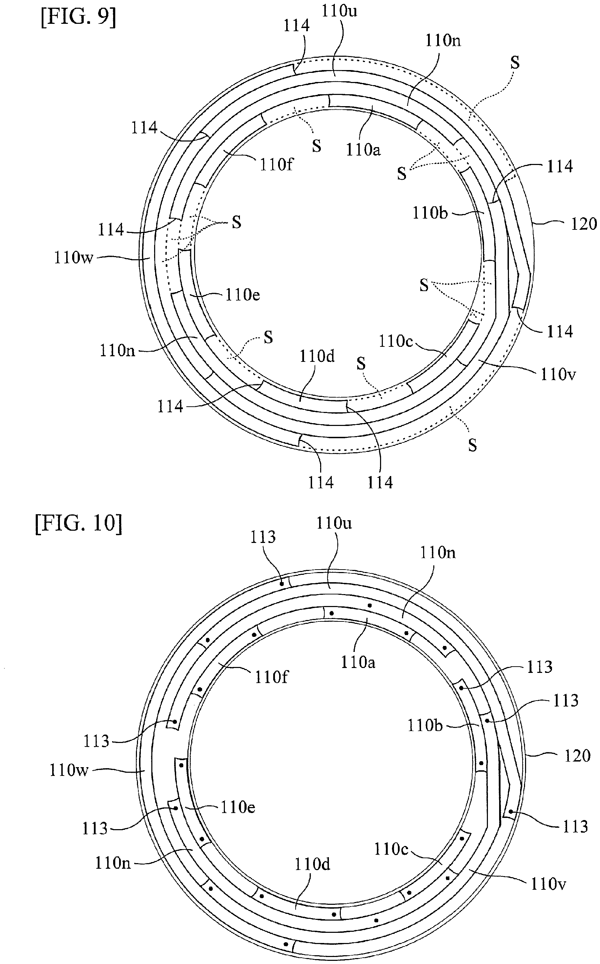

Next, as shown in FIG. 9, the rectangular wire 101 to be covered that was thus covered with insulating material is divided at predetermined circumferential locations to form the connection pattern shown in FIG. 5. According to this embodiment, an absent portion S (shown by the dashed line in FIG. 9) having a predetermined length is formed in the rectangular wire 101 to be covered using a drill or punch press, for example. With this arrangement, both longitudinal end portions of each of the conductive members 110 formed by the division by the absent portion S can serve as connection locations for the rectangular wire 101 to be covered and the winding end portion 7a. Each of the conductive members 110 formed by division comprises a concave curved surface 114 corresponding to the shape of the drill or punch press on both end portions in the circumferential direction. Note that an absent portion occurs in the insulating member 120 as well when the rectangular wire 101 to be covered is divided as described above. Nevertheless, the absent portion of the insulating member 120 is not shown in FIG. 9 (and similarly in FIG. 10, FIG. 12, FIG. 13, and FIG. 14) to prevent complexities in the illustration. Note that this step corresponds to the third step described in the claims.

The absent portion S does not necessarily need to be formed at a predetermined length as in this embodiment. For example, the absent portion S may form a simple round hole shape or a short square hole shape. Further, the division process may be performed using a tool other than a drill or punch press. Furthermore, the formed end surface shape of each of the conductive members 110 may be flat rather than curved. That is, as long as the rectangular wire 101 to be covered is divided so that the insulation of each of the conductive members 110 is maintainable, there is no limit to the shape or length of the absent portion S.

Next, as shown in FIG. 10, the through-hole 113 through which the winding end portion 7a is inserted in the axial direction of the rotating shaft 10 is formed in each of the conductive members 110 using a drill, etc. The through-hole 113 is provided to the substantially central position in the width direction of both longitudinal end portions of each of the conductive members 110. Further, the covering material 112 around the circumference of the through-hole 113 of each of the conductive members 110 is peeled away using a tool such as sand paper or a knife. Furthermore, the tapered hole 121 is provided to a location corresponding to the through-hole 113 of the surface 122 on the opposite side of the connection side of the insulating member 120 using a drill, etc. (refer to FIG. 3 and FIG. 4). With the above steps, the wire connecting substrate 100 is thus manufactured.

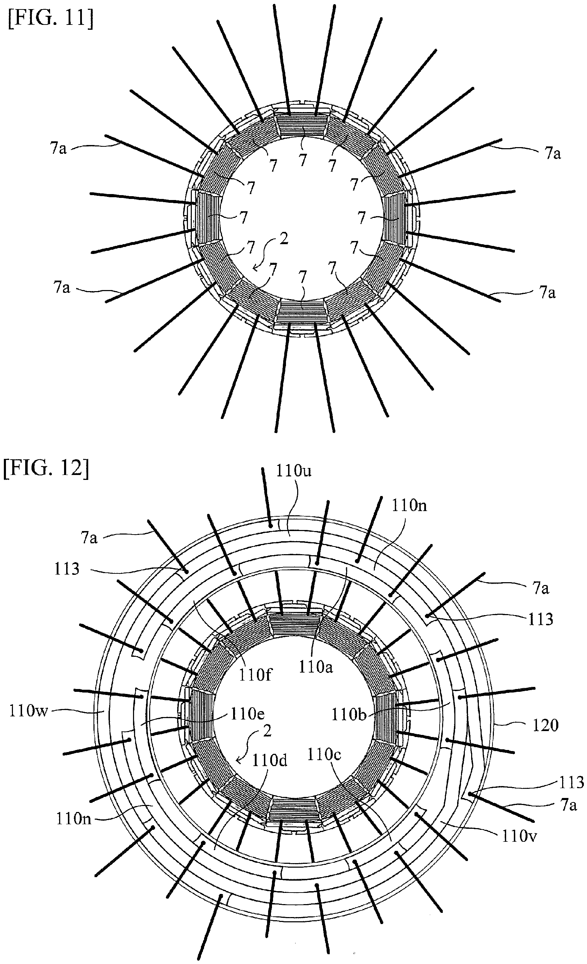

Next, as shown in FIG. 11, the end portion 7a of each of the windings 7 is pulled out from the stator 2 to the side opposite to the load side (to the front of the paper bearing FIG. 11), along the axial direction of the rotating shaft 10. At this time, two of the end portions 7a corresponding to the start and the end of the windings of each of the windings 7 are pulled out.

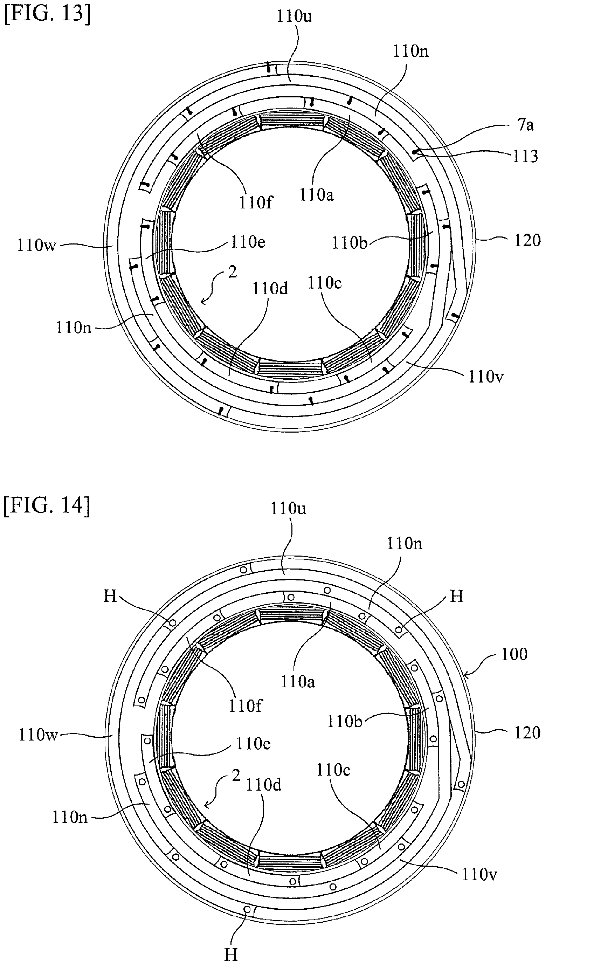

Next, as shown in FIG. 12, each of the winding end portions 7a pulled out from the stator 2 is inserted through the through-hole 113 of the corresponding conductive member 110 via the tapered hole 121 provided to the insulating member 120. Subsequently, as shown in FIG. 13, the wire connecting substrate 100 is fixed to the insulator (not shown) of the stator 2 using adhesive or the like. Then, the unnecessary section of the winding end portion 7a is cut off to form a length at which the winding end portion 7a slightly protrudes from the surface on the connection side of each of the conductive members 110. Then, as shown in FIG. 14, soldering is performed to fix each of the winding end portions 7a to each of the conductive members 110 by the solder H. With the above, the wire connecting substrate 100 is installed to the stator 2, and the rotating electrical machine 1 is manufactured.

Note that it is possible to remove a portion or automate a major portion of the above manufacturing process. "A portion of the process" refers to steps that require manual work, such as fixing the rectangular wire 101 to be covered to the metal die when forming the insulating member 120. Note that the step (FIG. 10) of providing the through-hole 113 to the conductive member 110, and the step (FIG. 12) of inserting the winding end portion 7a through the through-hole 113 via the tapered hole 121 correspond to the fourth step described in the claims.

### Advantages of the embodiment

According to the embodiment described above, the following advantages are achieved. That is, in the rotating electrical machine 1, each of the conductive members 110 of the wire connecting substrate 100 comprises a through-hole 113. Then, the winding end portion 7a of the stator 2 is directly connected to the conductive member 110 by inserting the winding end portion 7a through this through-hole 113 in the axial direction of the rotating shaft 10. With this arrangement, the terminal member for connecting the winding end portion 7a and the conductive member 110 is no longer required. As a result, compared to a configuration in which the terminal member is provided so as to protrude from the insulating member 120 toward the outer peripheral side in the diameter direction, it is possible to decrease the dimension in the diameter direction of the wire connecting substrate 100. Further, in a case where the terminal member protrudes toward the outer peripheral side of the insulating member 120, the terminal member must be routed around in the axial direction of the rotating shaft 10 to prevent the terminal member of the conductive member 110 on the inner peripheral side from interfering with the conductive member 110 on the outer peripheral side. Or, the conductive member 110 of each phase needs to be arranged so that it shifts in the axial direction of the rotating shaft 10. This then causes an increase in the axial dimension of the wire connecting substrate 100. In this embodiment, the winding end portion 7a of the stator 2 is inserted in the axial direction of the rotating shaft 10 and connected to each of the conductive members 110. With this arrangement, the terminal member no longer needs to be routed around in the axial direction of the rotating shaft 10, and the conductive member 110 no longer needs to be shifted in position in the axial direction of the rotating shaft 10 for each phase. Accordingly, it is possible to decrease the axial dimension of the wire connecting substrate 100. Accordingly, miniaturization of the wire connecting substrate 100 is thus achieved in the diameter direction and the axial direction. As a result, miniaturization of the rotating electrical machine 1 is achieved.

Further, in particular, according to the embodiment, the conductive members 110v and 100u respectively comprise the linear portions 110vc and 110uc that linearly extend in the tangent line direction of the concentric circle R on the inner peripheral side. With the linear portions 110vc and 110uc thus provided, it is possible to form the plurality of concentrically arranged conductive members 110 with the single rectangular wire 101 to be covered, which is wound in layers in the radial direction, divided into parts. This achievement of forming the conductive member 110 using a single wire rod significantly suppresses waste in material compared to a case where the conductive member 110 is formed by stamping the metal member. Thus, a reduction in cost is achieved.

Note that, in a case where the plurality of conductive members 110 is formed using a single wire rod, division of the rectangular wire 101 to be covered that is formed into a simple spiral shape without any linear portions is also conceivable. Nevertheless, in such a case, the radius of curvature of the formed conductive member 110 continuously changes. As a result, the level of difficulty of the work of punching the through-hole 113 into the conductive member 110, as well as the connection work of inserting and connecting the winding end portion 7a of the stator 2 though the through-hole 113 increases. Conversely, according to this embodiment, the linear portions 110vc and 110uc are provided to the conductive members 110v and 110u. That is, the rectangular wire 101 to be covered is formed into a spiral shape comprising the linear portions 110vc and 110uc. With this arrangement, it is possible to achieve a uniform radius of curvature of the rectangular wire 101 to be covered in regions other than the linear portions 110vc and 110uc, and concentrically dispose the rectangular wire 101 to be covered. As a result, simplification of the hole punching work and connection work is achieved. Further, automation of this work is also possible.

Further, in particular, according to this embodiment, the tapered hole 121 is provided to a location corresponding to the through-hole 113 provided to the conductive member 110 on the side opposite the connection side of the insulating member 120. This tapered hole 121 makes it possible to introduce the winding end portion 7a of the stator 2 through the through-hole 113. Accordingly, connection work is further simplified, facilitating automation thereof.

Further, in particular, according to the embodiment, the conductive member 110 comprises the convex curved surface 114 on both end portions in the circumferential direction. Such the conductive member 110 can be formed by dividing the rectangular wire 101 to be covered, which is wound in layers at predetermined locations, using a drill or punch press, which is a general-purpose tool. As a result, it is possible to readily form the conductive member 110 at a low price, without use of a special tool.

Further, in particular, according to the embodiment, the rectangular wire 101 to be covered, which has a square cross-sectional shape, is used for the conductive member 110. With this arrangement, compared to a case where a round wire having a circular or round cross-sectional shape is used, the process of providing the through-hole 113 through which the winding end portion 7a is inserted to the conductive member 110 and the process of division at predetermined locations are easier to perform. As a result, the workability of the conductive member 110 is improved. Further, while soldering is performed when connecting the winding end portion 7a of the stator 2 to the conductive member 110, soldering may be performed on a flat surface using the rectangular wire 101 to be covered. As a result, an improvement in workability is achieved. Furthermore, in a case where a non-covered rectangular wire is used, for example, the radial spacing between the conductive members 110 for maintaining insulation needs to be a certain size or greater. Use of the rectangular wire 101 to be covered as in the embodiment makes it possible to minimize this spacing to the extent possible and further minimize the dimension of the wire connecting substrate 100 in the diameter direction.
Further, according to the embodiment described above, the following advantages are achieved. That is, in this embodiment, the plurality of conductive members 110 of the wire connecting substrate 100 is configured so that the rectangular wire 101 to be covered, which is divided by the absent portion S, is disposed in layers in the radial direction. Then, the plurality of conductive members 110 is disposed on the same plane, which is substantially orthogonal to the rotating shaft direction. With this arrangement, it is possible to decrease the axial dimension of the wire connecting substrate 100 to the extent possible. As a result, miniaturization of the rotating electrical machine 1 is achieved. Further, the achievement of forming the conductive member 110 using a single wire rod significantly suppresses waste in material compared to a case where the conductive member 110 is formed by stamping the metal member, reducing costs.
Further, according to the embodiment described above, the following advantages are achieved. That is, according to the embodiment, the wire connecting substrate 100 is manufactured by dividing the rectangular wire 101 to be covered, which is a single conductive wire rod formed into a spiral shape, at predetermined circumferential positions. With this arrangement, the plurality of conductive members 110 formed by this division process can be disposed on a common plane which is substantially orthogonal to the rotating shaft direction. With this arrangement, it is possible to decrease the axial dimension of the wire connecting substrate 100 to the extent possible. As a result, miniaturization of the rotating electrical machine 1 is achieved. Further, the achievement of forming the conductive member 110 using a single wire rod significantly suppresses waste in material compared to a case where the conductive member 110 is formed by stamping the metal member, etc. Accordingly, a reduction in cost is achieved.

### Modifications

Note that the present disclosure is not limited to the above embodiment, and various modifications may be made without deviating from the spirit and scope of the disclosure.

For example, while the embodiment has described an illustrative scenario in which the connection pattern has two star connection systems, the present disclosure is not limited thereto. That is, the present disclosure may be applied to various connection patterns, such as delta connection or V-shaped connection, by suitably changing the number of windings, the division locations, and the connection locations of the rectangular wire 101 to be covered.

Further, the above has described an illustrative scenario in which the rotating electrical machine 1 is a three-phase AC electrical motor having 12 of the windings 7. Nevertheless, the number of the windings 7 may be suitably changed. Further, the present disclosure may also be applied to an electrical motor other than a three-phase AC electrical motor, such as a single-phase AC electrical motor or DC electrical motor. That is, the type of electrical motor is not limited. As long as the end portion of the windings of the stator is connected using a predetermined connection pattern, the present disclosure may be applied to various electrical motors.

Further, while according to the above the rectangular wire 101 to be covered that comprises the covering material 112 is used for the conductive member 110, a rectangular wire that is without the covering material 112 may be used. Further, a rectangular wire is not necessarily required; use of a wire (such as a round wire) having a cross-sectional shape other than a square may be employed.

Further, while according to the above the rectangular wire 101 to be covered is formed into a spiral shape having linear portions 101a to 101c, the present disclosure is not limited thereto. For example, the rectangular wire 101 to be covered may be formed into a simple spiral shape without any linear portions, wherein the radius of curvature continually changes. In this case, the conductive member is formed by dividing this formed object. In this case as well, miniaturization of the wire connecting substrate 100 is achieved.
Further, while according to the above the plurality of circular-arc shaped conductive members 110 is formed by dividing the single wire rod at predetermined locations, the present disclosure is not limited thereto. For example, circular-arc shaped or circular-shaped conductive members achieved by stamping the metal member may be concentrically disposed, and a through-hole through which the end portion of the windings is inserted in the axial direction of the rotating shaft 10 may be provided to thereto. In this case as well, miniaturization of the wire connecting substrate 100 is achieved.

Further, while the above has described an illustrative scenario in which the rotating electrical machine 1 is an inner rotor type comprising the rotor 3 on the inside of the stator 2, the present disclosure is not limited thereto. The present disclosure is also applicable to a rotating electrical machine of an outer rotor type comprising the rotor 3 on the outside of the stator 2. Furthermore, while the above has described an illustrative scenario in which the rotating electrical machine 1 is an electrical motor, the present disclosure is not limited thereto. The present disclosure is also applicable to a case where the rotating electrical machine 1 is a generator.

Further, other than that already stated above, techniques based on the above embodiment and each of the modifications may be suitably combined as well.

Although other examples are not individually described herein, various changes and modifications can be made to the embodiment and modifications without departing from the spirit and scope of the present disclosure.

## Claims

1. A rotating electrical machine (1) comprising a rotor (3), a stator (2), and a wire connecting substrate (100) configured to connect end portions (7a) of windings (7) of said stator (2) using a predetermined connection pattern, **characterized in that**:
said wire connecting substrate (100) comprises:
a plurality of circular-shaped or circular-arc shaped conductive members (110) that are concentrically arranged and connected to said end portions (7a) of said windings (7) respectively; and
a circular-shaped insulating member (120) configured to cover at least a portion of a surface of said conductive members (110); and wherein
each of said conductive members (110) comprises a through portion (113) through which said end portion (7a) of said windings (7) is inserted along an axial direction of a rotating shaft (10).

2. The rotating electrical machine (1) according to claim 1, wherein:
said conductive members (110) further comprises:
two circular-arc shaped circumferential portions (110ui, 110uo, 110vi, 110vo) configured to be concentrically arranged and differ in radius of curvature with each other; and
a linear portion (110uc, 110vc) configured to be integrally provided between said two circumferential portions (110ui, 110uo, 110vi, 110vo) and configured to linearly extend along a tangent line direction of the circumferential portions (110ui, 110vi) on an inner peripheral side among said two circumferential portions (110ui, 110uo, 110vi, 110vo).

3. The rotating electrical machine (1) according to claim 2, wherein:
said conductive member (110) further comprises a concave curved surface (114) at an end portion on at least one side in a circumferential direction.

4. The rotating electrical machine (1) according to any one of claims 1 to 3, wherein:
said conductive member (110) is made of a rectangular wire.

5. A rotating electrical machine (1) comprising a rotor (3), a stator (2), and a wire connecting substrate (100) configured to connect end portions (7a) of windings (7) of said stator (2) using a predetermined connection pattern, **characterized in that**:
said wire connecting substrate (100) comprises:
a plurality of conductive members (110) that are configured by disposing conductive wire rods (101) divided respectively by absent portions (S) in layers in the radial direction, and are connected to said end portions (7a) of said windings (7) respectively; and
a circular-shaped insulating member (120) configured to cover at least a portion of a surface of said conductive members (110); and wherein
said plurality of conductive members (110) are arranged to be positioned on a common plane which is substantially orthogonal to an axial direction of a rotating shaft (10).

6. The rotating electrical machine (1) according to claim 5, wherein:
each of said conductive members (110) comprises a through portion (113) through which said end portion (7a) of said windings (7) is inserted along an axial direction of said rotating shaft (10).

7. The rotating electrical machine (1) according to claim 6, wherein:
said plurality of conductive members (110) includes at least one conductive member comprising a circular-arc shape respectively and are concentrically arranged; and
said conductive members (110) further comprises:
two circular-arc shaped circumferential portions (110ui, 110uo, 110vi, 110vo) configured to be concentrically arranged and differ in radius of curvature with each other; and
a linear portion (110uc, 100vc) configured to be integrally provided between said two circumferential portions (110ui, 110uo, 110vi, 110vo) and configured to linearly extend along a tangent line direction of the circumferential portions (110ui, 110vi) on an inner peripheral side.

8. The rotating electrical machine (1) according to any one of claims 5 to 7, wherein:
said conductive member (110) further comprises a concave curved surface (114) at an end portion on said absent portion (S) side.

9. The rotating electrical machine (1) according to any one of claims 5 to 8, wherein:
said conductive wire rod (101) is a rectangular wire.

10. The rotating electrical machine (1) according to any one of claims 1 to 4 and 6 to 9, wherein:
said insulating member (120) comprises at least one tapered hole (121) at a location corresponding to said through portion (113) of said conductive member (110).

11. A wire connecting substrate (100) of a rotating electrical machine that is provided to the rotating electrical machine comprising a rotor (3) and a stator (2), and is configured to connect end portions (7a) of windings (7) of said stator (2) using a predetermined connection pattern, comprising:
a plurality of circular-shaped or circular-arc shaped conductive members (110) that are concentrically arranged and configured to connect said end portions (7a) of said windings (7) respectively using a predetermined pattern; and
a circular-shaped insulating member (120) configured to cover at least a portion of a surface of said conductive members (110); and wherein
each of said conductive members (110) comprises a through portion (113) through which said end portion (7a) of said windings (7) is inserted along an axial direction of a rotating shaft (10).

12. A wire connecting substrate (100) of a rotating electrical machine that is provided to the rotating electrical machine (1) comprising a rotor (3) and a stator (2), and is configured to connect end portions (7a) of windings (7) of said stator (2) using a predetermined connection pattern, comprising:
a plurality of conductive members (110) that are configured by disposing conductive wire rods (101) divided respectively by absent portions (S) in layers in the radial direction, and are connected to said end portions (7a) of said windings (7) respectively; and
a circular-shaped insulating member (120) configured to cover at least a portion of a surface of said conductive members (110); and wherein
said plurality of conductive members (110) are arranged to be positioned on a common plane which is substantially orthogonal to an axial direction of a rotating shaft (10).

13. A manufacturing method of a rotating electrical machine comprising a rotor (3), a stator (2), and a wire connecting substrate (100) configured to connect end portions (7a) of windings (7) of said stator (2) using a predetermined connection pattern, wherein:
said wire connecting substrate (100) is manufactured by a manufacturing process comprising:
a forming that forms a conductive wire rod (101) into a spiral shape;
a covering that covers at least a portion of a surface of said wire rod (101) formed into said spiral shape with insulating material; and
a dividing that divides said wire rod (101) covered by said insulating material at predetermined circumferential locations.

14. The manufacturing method according to claim 13, wherein:
said manufacturing method of said wire connecting substrate (100) further comprises a providing that provides a through portion (113) to each of the divided wire rods (101) and an inserting that inserts said end portion (7a) of said windings (7) through said through portion (113) along an axial direction of a rotating shaft (10).

15. The manufacturing method according to claim 14, wherein:
in said forming, said wire rod (101) is formed into a spiral shape comprising a linear portion (110uc, 110vc) that linearly extends along a tangent line direction of a circular-arc shape.

16. The manufacturing method according to claim 14 or 15, wherein:
in said providing, a tapered hole (121) is provided to a location corresponding to said through portion (113) of said insulating member (120) formed using said insulating material, and in said inserting, said end portion (7a) of said windings (7) is inserted through said through portion (113) of said wire rod (101) via said tapered hole (121).

17. The manufacturing method according to any one of claims 13 to 16, wherein:
in said dividing, said wire rod (101) is divided at predetermined circumferential locations using a drill or a punch press.

18. The manufacturing method according to any one of claims 13 to 17, wherein:
in said forming, said conductive wire rod (101) made of a rectangular wire is formed into a spiral shape.

19. A manufacturing method of a wire connecting substrate (100) that is provided to a rotating electrical machine (1) comprising a rotor (3) and a stator (2), and is configured to connect end portions (7a) of windings (7) of said stator (2) using a predetermined connection pattern, comprising:
a forming that forms a conductive wire rod (101) into a spiral shape;
a covering that covers at least a portion of a surface of said wire rod (101) formed into said spiral shape with insulating material; and
a dividing that divides said wire rod (101) covered by said insulating material at predetermined circumferential locations.
